**Europäisches Patentamt**

**European Patent Office**

**Office européen des brevets**

(19)

(11) Veröffentlichungsnummer: **0 208 944 B1**

(12) **EUROPÄISCHE PATENTSCHRIFT**

(45) Veröffentlichungstag der Patentschrift: **12.02.92**

(51) Int. Cl.⁵: **H02M 5/257**

(21) Anmeldenummer: **86108443.2**

(22) Anmeldetag: **20.06.86**

(54) **Schaltanordnung zur Vollwellen-Leistungssteuerung.**

(30) Priorität: **10.07.85 DE 3524563**

(43) Veröffentlichungstag der Anmeldung:
**21.01.87 Patentblatt 87/04**

(45) Bekanntmachung des Hinweises auf die
Patenterteilung:
**12.02.92 Patentblatt 92/07**

(84) Benannte Vertragsstaaten:
**GB IT NL**

(56) Entgegenhaltungen:
**EP-A- 0 076 510**
**EP-A- 0 140 851**
**DE-A- 2 608 489**
**FR-A- 2 537 802**
**US-A- 4 031 458**

(73) Patentinhaber: **Marquardt GmbH**
**Schlossstrasse 16**
**W-7201 Rietheim-Weilheim 1(DE)**

(72) Erfinder: **Kühnemundt, Gerhard**
**Rietheimer Strasse 12**
**W-7204 Wurmlingen(DE)**
Erfinder: **Elsässer, Heinz**
**Lerchenstrasse 7**
**W-7201 Rietheim-Weilheim(DE)**

(74) Vertreter: **Patentanwälte Dipl.-Ing. E. Eisele**
**Dr.-Ing. H. Otten**
**Seestrasse 42**
**W-7980 Ravensburg(DE)**

# Beschreibung

Die Erfindung betrifft eine Schaltanordnung zur Vollwellen-Leistungssteuerung mit einem Triac, der in Reihe mit einer Last an einer Wechselspannungsquelle liegt, wobei die Reihenschaltung eines Vorwiderstandes und einer Z-Dioden-Anordnung zu dem Triac parallel geschaltet ist, ein RC-Glied in Form einer Reihenschaltung eines Potentiometers und eines Kondensators zu der Z-Dioden-Anordnung parallel geschaltet ist und die Steuerelektrode des Triacs über eine Triggerdiode an den Verbindungspunkt des RC-Gliedes angeschlossen ist.

Eine Schaltanordnung dieser Art ist aus US-A-4 031 458 bekannt. Bei dieser und anderen Schaltanordnungen zur Phasenanschnittsteuerung ist der maximal erreichbare Stromflußwinkel wesentlich geringer als 180°. Zwar ist es an sich bekannt, zur Vollaussteuerung den Triac mittels eines Schalters zu überbrücken. Dieser Schalter führt aber den vollen Laststrom und muß daher entsprechend groß dimensioniert werden. Wird andererseits versucht, die Vollaussteuerung durch extreme Verkürzung der Zeitkonstante des RC-Gliedes herbeizuführen, so ist das Potentiometer durch Überlastung gefährdet (siehe EP-A-0 076510).

Bei der Serienfertigung solcher Schaltanordnungen ergeben sich ferner Schwierigkeiten infolge der fabrikatorisch bedingten Unterschiede der Zener-Spannungen bei den einzelnen Z-Dioden und der Zündspannungen bei den Triggerdioden. Die Z-Dioden bewirken zwar eine in hohem Maße von der Netzspannungsamplitude unabhängige Arbeitsweise, jedoch nur dann, wenn die Z-Dioden hinsichtlich gleicher Nennspannungen sorgfältig ausgewählt werden. Die tatsächlich auftretenden Z-Spannungen haben eine Schwankungsbreite von 58 bis 67 V.

Der Erfindung liegt die Aufgabe zugrunde, eine Schaltanordnung der einleitend bezeichneten Art so weiterzubilden, daß wenigstens annähernd Vollaussteuerung erreichbar ist, ohne daß es eines voluminösen Schalters bedarf oder das Potentiometer thermisch überlastet wird, und daß die Fertigungstoleranzen der Z-Dioden und der Triggerdioden einfach abgeglichen werden können.

Diese Aufgabe wird dadurch gelöst, daß der Vorwiderstand der Z-Dioden-Anordnung aus zwei Reihenwiderständen besteht, deren Verbindungspunkt mittels eines Schalters mit dem Verbindungspunkt des RC-Gliedes und der Triggerdiode verbindbar ist und daß die Zener-Dioden-Anordnung mittels eines Spannungsteilers überbrückt und das Potentiometer an einem verstellbaren Abgriff des Spannungsteilers angeschlossen ist.

Der Teilwiderstand zwischen dem Schalter und dem Netzspannungsanschluß kann einen verhältnismäßig geringen Widerstandswert, beispielsweise 10 kΩ aufweisen. Er bewirkt eine weitgehende Vollaussteuerung des Triacs. Der entsprechende Steuerstrom ist einerseits so groß, daß das Potentiometer bei Dauerbetrieb thermisch überlastet wäre, andererseits aber so klein, daß der erforderliche Schalter verhältnismäßig klein dimensioniert und deshalb mit dem Potentiometer auf kleinem Raum untergebracht werden kann. Der Schalter übernimmt den Strom, bevor dieser eine für das Potentiometer schädliche Größenordnung erreicht.

Der Vorschlag, daß die Z-Dioden-Anordnung mittels eines Spannungsteilers überbrückt und das Potentiometer an einem verstellbaren Abgriff des Spannungsteilers angeschlossen ist, hat den Vorteil, daß der verstellbare Abgriff bei der Serienfertigung in einem Vorgang sowohl zum Abgleich der Z-Spannungen der Zener-Dioden als auch der Zündspannungen der Triggerdioden herangezogen werden kann. Praktisch geht das so vor sich, daß mit Hilfe des Spannungsteilers bei einer bestimmten Potentiometerstellung ein ganz bestimmter Stromflußwinkel eingestellt wird.

Zur einfacheren Bedienung wird vorgeschlagen, daß ein gemeinsames Betätigungsorgan für das Potentiometer und den Schalter vorgesehen ist, derart, daß in gleicher Betätigungsrichtung nach Erreichen der Potentiometerstellung geringsten Widerstandes der Schalter geschlossen wird. Das gemeinsame Betätigungsorgan kann außerdem, wie an sich bekannt, am anderen Ende seines Bewegungsbereichs auch noch auf den Netzschalter wirken.

Die Aufteilung des Vorwiderstandes in zwei Teilwiderstände bringt es auch mit sich, daß die Unterschiede der Ohmwerte zwischen den kleinsten und größten Widerständen der gesamten Schaltanordnung sich nur wenig unterscheiden, das Verhältnis der Ohmwerte insbesondere nur 1 : 10 beträgt. Es wird deshalb vorgeschlagen, daß die verwendeten Widerstände aus einer Niedertemperatur-Dickschichtpaste mit Mischungsbestandteilen aus Kohle und Lack bestehen und auf eine Platine aus Hartpapier gedruckt sind, welche auch die übrigen Schaltelemente trägt und durch Leiterbahnen miteinander verbindet. Vorzugsweise kann für alle Widerstände der Schaltanordnung ein und dieselbe Dickschichtpaste verwendet werden. Während bisher in der Dickschichttechnik nur Keramiksubstrate als Basis verwendet werden, bringt die Verwendung von einfachem gewöhnlichem Hartpapier eine wesentliche Kostensenkung mit sich.

Ein Ausführungsbeispiel der Erfindung wird nachfolgend anhand der Zeichnung erläutert. Im einzelnen zeigt

Fig. 1    ein Schaltbild,

Fig. 2    eine räumliche Darstellung einer gedruckten Schaltung mit einem Dickschichtwiderstand.

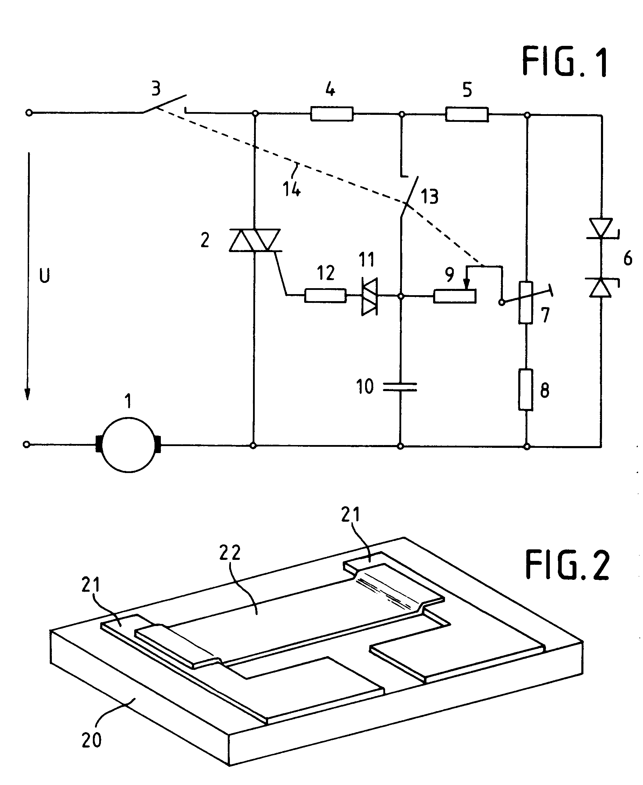

Nach Fig. 1 ist der Anker 1 eines Elektromotors in Reihe mit einem Triac 2 und einem Einschalter 3 an eine Wechselspannung U üblicher Versorgungsfrequenz angeschlossen. Eine weitere Reihenschaltung liegt parallel zum Triac 2. Sie besteht, beginnend an der Verbindungsleitung des Einschalters 3 mit dem Triac 2 aus einem Widerstand 4 von 10 kΩ, einem Widerstand 5 von 47 kΩ und zwei gegeneinander geschalteten Z-Dioden 6 mit einer Z-Spannung von etwa 62 V. An den Z-Dioden ist ein Spannungsteiler angeschlossen, bestehend aus einem Stellwiderstand 7 von 47 kΩ und einem Widerstand 8 von 100 kΩ Zwischen dem Abgriff des Stellwiderstands 7 und der Verbindungsleitung des Triacs 2 mit dem Anker 1 ist ein RC-Glied eingeschaltet, bestehend aus einem Potentiometer 9 von 50 kΩ und einem Kondensator 10 von 0,1 μF. Die Verbindungsleitung dieser beiden Bauelemente des RC-Gliedes bildet den Steuerpunkt. Er ist über eine Triggerdiode 11 mit einer Zündspannung von etwa 23 V und einen Widerstand 12 von 27 Ohm mit dem Steueranschluß des Triacs 2 verbunden. Dieser Widerstand bewirkt eine Zundverzögerung zum Schutz des Triacs gegen zu spontan einsetzende Zündungen. Außerdem liegt zwischen dem Steuerpunkt und der Verbindungsleitung der beiden Widerstände 4 und 5 ein Überbrückungsschalter 13. Der Einschalter 3, das Stellorgan des Potentiometers 9 und der Überbrückungsschalter 13 können mittels eines gemeinsamen Betätigungsorgans in der Weise bewegt werden, daß bei gleicher Bewegungsrichtung zunächst der Einschalter 3 eingeschaltet wird, sodann das Potentiometer von seiner Stellung größten Widerstandes zu der Stellung kleinsten Widerstandes bewegt und schließlich der Überbrückungsschalter 13 geschlossen wird bzw. umgekehrt. Mit einer gestrichelten Linie 14 ist diese mechanische Wirkungsverbindung angedeutet.

Da die verwendeten Bauteile in ihren Kennwerten innerhalb der Toleranzgrenzen fertigungsbedingte Abweichungen vom Nennwert aufweisen, wird jede einzelne Schaltanordnung am Ende des Produktionsganges einer Prüfung und Justierung unterzogen, wobei der Stellwiderstand 7 bei einer bestimmten Potentiometerstellung so verstellt wird, daß der Stromflußwinkel des Triacs 2 einen bestimmten Wert hat, entsprechend einer bestimmten Leistungsstufe, die dann auch innerhalb verhältnismäßig großer Schwankungen der Netzspannung beibehalten wird.

Durch einen nicht dargestellten Parallelwiderstand zum Potentiometer kann die Abhängigkeit der vom Verbraucher aufgenommenen Leistung von der Potentiometerstellung verändert werden.

Fig. 2 gibt ein Beispiel für die praktische Ausführung der Schaltanordnung im Hinblick auf die verwendeten Widerstände. Auf einer Basis 20 auf einfachem Hartpapier sind zwei L-förmige Leitungsstränge 21 aufgebracht, deren einander entgegenstehende Schenkel als Anschlußflächen dienen. Die beiden parallelen Schenkel dieser Leitungsstränge 21 sind von einem rechteckigen Dickschichtfilm 22 überbrückt, welcher einen Ohm'schen Widerstand bildet. Der Ohmwert ergibt sich aus dem Querschnitt und der Länge des Films sowie aus der Zusammensetzung der Dickschichtpaste, aus welcher er besteht.

**Patentansprüche**

1. Schaltanordnung zur Vollwellen-Leistungssteuerung mit einem Triac, der in Reihe mit einer Last an einer Wechselspannungsquelle liegt, wobei die Reihenschaltung eines Vorwiderstandes und einer Z-Dioden-Anordnung zu dem Triac parallel geschaltet ist, ein RC-Glied in Form einer Reihenschaltung eines Potentiometers und eines Kondensators zu der Z-Dioden-Anordnung parallel geschaltet ist und die Steuerelektrode des Triacs über eine Triggerdiode an den Verbindungspunkt des RC-Gliedes angeschlossen ist, dadurch gekennzeichnet, daß der Vorwiderstand der Z-Dioden-Anordnung (6) aus zwei Reihenwiderständen (4, 5) besteht, deren Verbindungspunkt mittels eines Schalters (13) mit dem Verbindungspunkt des RC-Gliedes (9, 10) und der Triggerdiode (11) verbindbar ist und daß die Zener-Dioden-Anordnung (6) mittels eines Spannungsteilers (7, 8) überbrückt und das Potentiometer (9) an einem verstellbaren Abgriff des Spannungsteilers angeschlossen ist.

2. Schaltanordnung nach Anspruch 1, dadurch gekennzeichnet, daß ein gemeinsames Betätigungsorgan für das Potentiometer (9) und den Schalter (13) vorgesehen ist, derart, daß in gleicher Betätigungsrichtung nach Erreichen der Potentiometerstellung geringsten Widerstandes der Schalter geschlossen wird.

3. Schaltanordnung nach einem der vorhergehenden Ansprüche, dadurch gekennzeichnet, daß die verwendeten Widerstände aus einer Niedertemperatur-Dickschichtpaste (22) mit Mischungsbestandteilen aus Kohle und Lack bestehen und auf eine Hartpapier-Platine (20) gedruckt sind.

**Claims**

1. Switching equipment for full-wave power control with a triac which is disposed in series with a load on an alternating current voltage source, the series circuit of a dropping resistor and a Z-diode arrangement being switched in parallel with the triac, a RC network in the form of a series circuit of a potentiometer and of a capacitor being connected in parallel with the triac, and the control electrode of the triac being connected through a trigger diode with the connection point of the RC network, characterized in that the dropping resistor of the Z-diode arrangement (6) consists of two series resistors (4, 5), the connection point of which being connectable by means of a switch (13) with the connection point of the RC network (9, 10) and the trigger diode (11), and in that the Zener diode arrangement (6) is by-passed by means of a voltage divider (7, 8) and the potentiometer (9) is connected to an adjustable tap of the voltage divider.

2. Switching arrangement according to claim 1, characterized in that a common actuation member is provided for the potentiometer (9) and the switch (13), in such a manner that the switch is closed in the same direction of actuation after reaching the potentiometer setting of the smallest resistance of the switch.

3. Switching arrangement according to the foregoing claims, characterized in that the resistors used consist of a low-temperature thick-layer paste (22) with admixture constituents of carbon and lacquer, and are printed on a hard paper blank.

**Revendications**

1. Circuit pour la commande en puissance d'ondes pleines, comportant un triac, qui est relié à une source de tension alternative en série avec une charge, le montage en série d'un système résistant et d'un agencement de diodes Zener étant monté en parallèle au triac, un circuit RC sous forme d'un montage en série d'un potentiomètre et d'un condensateur étant monté parallèlement à l'agencement de diodes Zener, et l'électrode de commande du triac étant raccordée au point de liaison du circuit RC par l'intermédiaire d'une diode de déclenchement, caractérisé en ce que le système résistant de l'agencement de diodes Zener (6) est constitué de deux résistances en série (4,5), dont le point de liaison peut être relié, au moyen d'un commutateur (13), au point de liaison du circuit RC (9,10) et de la diode de déclenchement (11), et en ce que l'agencement de diodes Zener (6) est shunté au moyen d'un diviseur de tension (7,8), et le potentiomètre (9) est relié à une prise réglable du diviseur de tension.

2. Circuit selon la revendication 1, caractérisé en ce qu'un organe d'actionnement commun est prévu pour le potentiomètre (9) et le commutateur (13), de sorte que, dans le même sens d'actionnement, après avoir atteint la position du potentiomètre de plus faible résistance, le commutateur est fermé.

3. Circuit selon une des revendications précédentes, caractérisé en ce que les résistances utilisées sont constituées d'une pâte à couche épaisse à basse température (22) avec des ingrédients de mélange, tels que carbone et laque, et sont pressées sur une platine de papier stratifié (20).

FIG. 1

FIG.2